Europäisches Patentamt

European Patent Office

Office européen des brevets

(11) Veröffentlichungsnummer: **0 127 565**

**A2**

(12) **EUROPÄISCHE PATENTANMELDUNG**

(21) Anmeldenummer: 84710016.1

(22) Anmeldetag: 23.05.84

(51) Int. Cl.³: **B 29 F 3/04**

(30) Priorität: 30.05.83 DE 3319604

(43) Veröffentlichungstag der Anmeldung:
05.12.84 Patentblatt 84/49

(84) Benannte Vertragsstaaten:
AT CH DE FR GB IT LI

(71) Anmelder: Firma Klaus Reinhold
Lienener Strasse 59
D-4540 Lengerich(DE)

(72) Erfinder: Reinhold, Klaus
Lienener Strasse 59
D-4540 Lengerich(DE)

(74) Vertreter: Busse & Busse Patentanwälte
Postfach 1226 Grosshandelsring 6
D-4500 Osnabrück(DE)

(54) Kalibriervorrichtung an einem Extruder.

(57) Bei einer Kalibriervorrichtung an einem Extruder wird eine berührungslose Kalibrierung mit Luftkisseneffekt in der Weise verwirklicht, daß durch Irisblenden (5, 6) begrenzte Ringräume (9) mit Druckluft versorgt werden, so daß an den Irisblenden (5, 6) ein Luftkisseneffekt auftritt. Dabei entsteht eine reibungsfreie, gleichförmig runde Kalibrierung mit verstellbarer Innenweite. Gleichzeitig wird mit der Luftzufuhr eine Außenkühlung der Schlauchfolie (2) bewirkt.

Fig 1

EP 0 127 565 A2

- 1 -

## Kalibriervorrichtung an einem Extruder

Die Erfindung betrifft eine Kalibriervorrichtung an einem Extruder nach dem Oberbegriff des Anspruchs 1.

Eine Kalibriervorrichtung dieser Art ist bereits mit einem geschlossenen Kalibrierzylinder vorgeschlagen, dessen Innenfläche durch eingeblasene Luft überspült und von der durchlaufenden Schlauchfolie distanziert wird. Eine solche Konstruktion hat den Nachteil, daß der Durchmesser des Kalibrierzylinders und damit die Weite des Folienschlauchs fest vorgegeben sind, während es sonst üblich ist, mit am Folienschlauch anliegenden Kalibrierzylindern bzw. -käfigen veränderbare Weiten vorzusehen und somit fallweise maßgerecht hergestellte Folien zu erhalten.

Darüber hinaus ist bei der vorbekannten Vorrichtung unvorteilhaft, daß die zur Erzeugung eines Luftkisseneffekts in den Kalibrierzylinder eingegebene Luft mit der Folie als dünner Film mitläuft, so daß dabei eine unzulängliche Kühlung auftritt.

Aufgabe der Erfindung ist est, eine Kalibriervorrichtung zu schaffen, die die Vorteile einer kontaktlosen Kalibrierung mit Hilfe des Luftkisseneffekts nutzt, dabei aber Änderungen im Kalibrierdurchmesser und eine gute Kühlluft-Umspülung der Schlauchfolie ermöglicht.

Gemäß der Erfindung wird diese Aufgabe mit den Merkmalen des Anspruchs 1 gelöst.

Von dem vorbekannten Konzept eines zylinderflächig verteilten Luftkissens abgehend wird die Kalibrierweite durch die lichte Öffnung der Irisblenden festgelegt, die von austretender Druckluft überspült sind. Diese lichten Weiten können durch Schließen oder Öffnen der Irisblenden verstellt werden, wobei typischerweise längs der Achse der Kalibriervorrichtung mehrere Irisblenden vorgesehen werden, die im allgemeinen gleiche oder zumindest näherungsweise gleiche Öffnungen aufweisen. Es ist aber auch ohne weiteres möglich, die Weiten unterschiedlich einzustellen und damit den Querschnitt der Schlauchfolie, die Luftführung im Kalibrierzylinder und insbesondere auch die Kühlluftverteilung zu beeinflussen.

Von besonderem Vorteil ist die Möglichkeit, Kühlluft in großer Menge zuzuführen, die in den zwischen den Irisblenden und dem außenseitig abschließenden Zylinder gebildeten Kammern verteilt und gewünschtenfalls auch an verschiedenen Stellen herausgeführt werden. Damit ergeben sich schnellere Abkühlzeiten, höhere Arbeitsgeschwindigkeiten und/oder geringere Bauhöhen für die hier in Frage stehenden Glasfolienanlagen.

Die Verbindung von Irisblenden mit einer Distanzierung der Folie durch Luftkisseneffekt hat überdies den besonderen Vorteil, daß die bei herkömmlichen verstellbaren Kalibriervorrichtungen nicht restlos vermeidbaren Ungleichmäßigkeiten, insbesondere in Form von Polygonwinkeln im Querschnitt durch die distanzierende Luft ausgerundet und geglättet werden. Damit ist eine äußerst hohe Gleichmäßigkeit in der Wandstärke der Folien erzielbar, die auch durch die Verteilung der Druckluft innerhalb des Querschnitts der Kalibriervorrichtung noch beeinflußt werden kann.

Weitere Merkmale und Vorteile der Erfindung ergeben sich aus den Ansprüchen und der nachfolgenden Beschreibung, in der zwei Ausführungsbeispiele des Gegenstands der Erfindung anhand einer Zeichnung näher erläutert sind. In der Zeichnung zeigen in jeweils schematisierter Darstellung:

Fig. 1      schnittbildliche Teilansicht einer Kalibriervorrichtung,

Fig. 2      Schnitt nach Linie II-II in Fig. 1 und

Fig. 3      schnittbildliche Seitenansicht eines Teils einer
zweiten Ausführungsform.

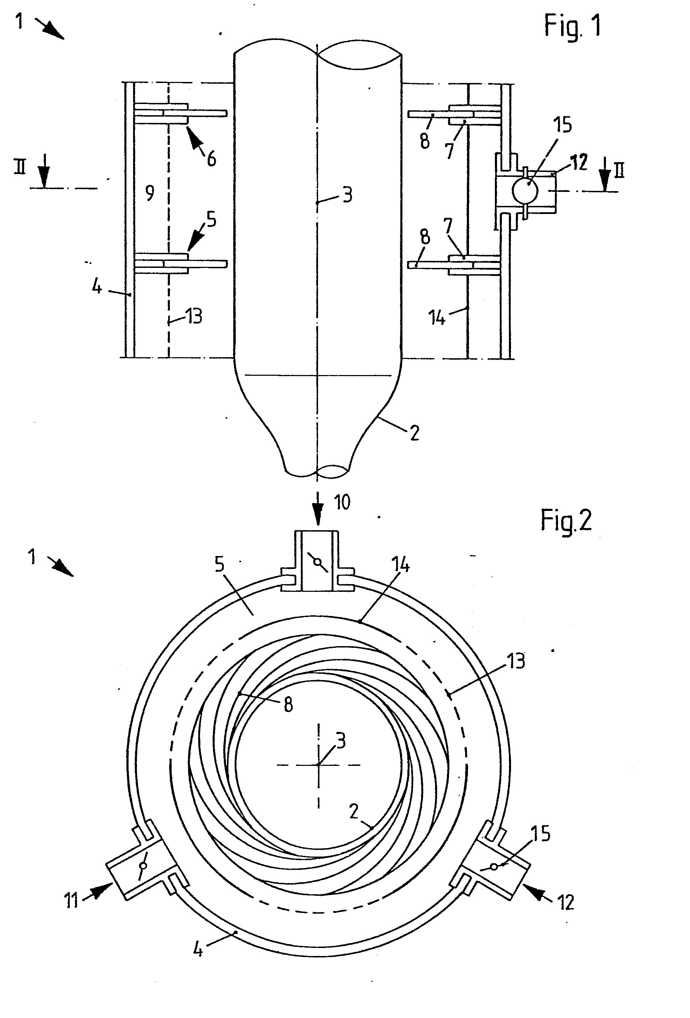

In den Fig. 1 und 2 ist ein Teil einer insgesamt mit 1 bezeichneten Kalibriervorrichtung für das Kalibrieren eines aus einem nicht dargestellten Extruder aufsteigend geführten und durch innen eingeschlossene Luft ausgeformten Blasfolienschlauchs 2 dargestellt. Die Kalibriervorrichtung 1 ist im wesentlichen zylindrisch zu einer Achse 3 ausgebildet und weist einen Umfangszylinder oder -mantel 4 auf, der über nicht dargestellte Stützelemente höhenverstellbar gegenüber dem Boden abgestützt ist.

Der zylindrische Innenraum wird etagenweise durch Irisblenden 5,6 gegliedert, deren Gehäuse 7 dicht mit dem Zylinder 4 abschließt. Das in der Draufsicht ringförmige Gehäuse definiert mit seinem Innendurchmesser die größtmögliche lichte Öffnung der Irisblende. Zur Verkleinerung dieser Öffnung lassen sich bekanntermaßen Lamellen 8 einer solchen Irisblende mittelpunktsymmetrisch nach innen einschwenken, so daß sich in sehr guter Näherung eine Ringöffnung verstellbaren Durchmessers symmetrisch zur Achse 3 ergibt.

Die beiden in Fig. 1 dargestellten Irisblenden 5,6 begrenzen zusammen mit dem Zylinder 4 einen Ringraum 9, in den über am Umfang verteilte Drucklufteinlässe 10,11,12 Druckluft einzublasen ist, die sich um den Blasfolienschlauch 2 herum verteilt und zwischen diesem und dem Innenrand der Irisblenden 5,6 entweicht, so daß dort ein Luftkisseneffekt entsteht.

Dadurch wird eine Anlage des Blasfolienschlauchs 2 an den Lamellen 8 vermieden, die wie bei herkömmlichen mechanischen Kalibriervorrichtungen zu Kontaktmarken auf dem Blasfolienschlauch, zu Reibverformungen und zu ungleichmäßigen Wandstärken führen könnte.

Der Luftkisseneffekt sorgt auch dafür, daß eine nicht ganz vermeidbare Polygonalität der Innenkontur der Irisblende gänzlich ausgerundet wird.

Um den Luftkisseneffekt verläßlich aufrechtzuerhalten, ist nicht nur ein gegenüber dem Innendruck im Schlauch 2 ausreichender Druck vorzusehen, sondern auch eine Fördermenge eingeblasener Luft, die sicherstellt, daß die Innenkanten der Irisblenden mit Luft überspült werden.

Die Fördermenge an Luft schafft auch eine durchaus erwünschte Kühlenergie herbei, die eine forcierte Abkühlung des Folienschlauchs bewirkt mit Möglichkeiten für eine schnellere Extrusion und/oder eine verringerte Bauhöhe der gesamten Anlagen. Damit bei hohem Luftdurchsatz und hoher Einblasgeschwindigkeit keine Anblaseffekte auf dem Folienschlauch auftreten, sind zunächst anstelle eines einzelnen Lufteinlasses mehrere, am Umfang verteilte Lufteinlässe vorgesehen. Deren Düseneffekte werden weiterhin durch ein im Ringraum 9 angeordnetes Leitblech 13 gebrochen, welches unmittelbar vor den Lufteinlässen geschlossene Bereiche 14 aufweist, im übrigen aber siebartig ausgebildet ist, um die Luft am Umfang gleichförmig zu verteilen. Zusätzlich sind in den Lufteinlässen Drosselklappen 15 angeordnet, die eine Einzeljustierung der Lufteinlässe im Sinne einer Beeinflussung der Luftverteilung längst des Umfangs ermöglichen. Insbesondere aber wird vorgesehen, daß die über Rohre und Schläuche zugeführte Luftmenge regulierbar ist - z.B. durch elektrische Leistungsumschaltung.

Während in der Fig. 1 nur ein einziger Ringraum 9 zwischen zwei Irisblenden 5,6 veranschaulicht ist, besteht die Kalibriervorrichtung regelmäßig aus mehreren, etagenweise übereinander angeordneten Ringräumen ähnlicher Gestaltung. Soweit dabei eine gerade Zahl von Irisblenden - und eine ungerade Zahl von Ringräumen - vorgesehen ist, kann die Luft in einen mittleren Ringraum eingegeben werden, so daß sie in der Folge nach oben und unten die anschließenden Ringräume durchläuft. Es versteht sich, daß aber auch die anderen Ringräume eine eigene Luftzufuhr erhalten können, um insbesondere auch die Kühlwirkung zu verbessern.

Die Verstellung der Irisblenden 5,6 erfolgt in bekannter Weise über ein Verstellgetriebe, wobei jede der Blenden individuell verstellbar sein kann. In der Regel wird aber zumindest ein Teil der Irisblenden gleich oder gleichsinnig zu verstellen sein, so daß für diese eine Verkopplung der Verstellgetriebe mit einer gemeinsamen Betätigung vorzusehen ist.

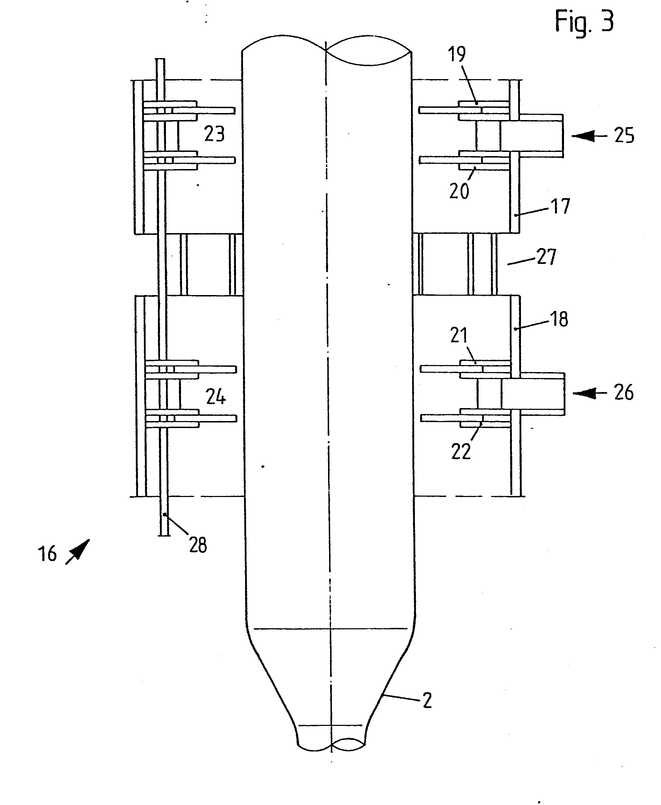

Bei der in Fig. 3 (teilweise) dargestellten, insgesamt mit 16 bezeichneten Kalibriervorrichtung bestehen Abweichungen gegenüber der vorbeschriebenen Kalibriervorrichtung 1 insbesondere in der Luftführung, die zwischen paarweise eng übereinanderliegende Irisblenden einlaufend und zwischen solchen Irisblendenpaaren austretend vorgesehen ist.

Eine etagenweise Gliederung der Kalibriervorrichtung sieht jeweils einen Zylindermantel 17,18 je Etage vor, der innenseitig ein Paar von Irisblenden 19,20 bzw. 21,22 trägt. Diese Irisblenden definieren nach innen zum Blasfolienschlauch 2 hin eine spaltartige Austrittsöffnung. Zwischen diesen Irisblenden gebildete Ringräume 23,24 werden über Drucklufteinlässe 25,26 mit Druckluft versorgt. Die Druckluft tritt von dem Ringraum 23 bzw. 24 nach oben und unten an den Irisblenden vorbei mit einem Luftkisseneffekt aus und entweicht durch Spalte wie einen Spalt 27 zwischen den Zylindermänteln 10 und 18.

Bei 28 ist in Fig. 3 ein Drehstab angedeutet, der die nicht eigens dargestellten Verstellgetriebe der Irisblenden miteinander im Sinne einer synchron Verstellung verbindet.

Diese Ausführungsform mit paarweise angeordneten Irisblenden sieht einen besonders hohen Luftdurchsatz vor und liefert dementsprechend eine hohe Kühlleistung an dem Umfangsbereich der Glasfolie.

Bei der Fähigkeit einer solchen mit Luftkisseneffekt betriebene Blende zur Erzeugung glatter Kalibrierquerschnitte versteht es sich, daß anstelle der vorbeschriebenen Irisblenden auch sonstige verstellbare Blendenkonstruktionen Anwendung finden können.

0127565

- 7 -

Patentansprüche:

1.    Kalibriervorrichtung an einem Extruder zum Abstützen von Schlauchfolien aus thermoplastischen Kunststoffen mit einem zumindest in einem Längsbereich ringförmig geschlossenen Zylinder, der innenseitig mit Druckluft beaufschlagbar ist, dadurch gekennzeichnet, daß der Zylinder (4,17,18) zumindest zwei einen Ringraum (9,23,24) innerhalb des Zylinders axial begrenzende Irisblenden (5,6,19,20,21,22) aufweist, die mit dem geschlossenen Längsbereich des Zylinders dicht, aber mit veränderbarer lichter Öffnung abschließen, wobei der Ringraum nach innen einen für einen luftkissenförmigen Austritt der Druckluft zur Schlauchfolie hin offenen Austrittsbereich aufweist.

2.    Kalibriervorrichtung nach Anspruch 1, dadurch gekennzeichnet, daß sie eine gerade Zahl von Irisblenden (5,6,19,20,21,22) aufweist, die zwischeneinander mit Druckluft beaufschlagte Ringräume (9,23,24) bilden.

3.    Kalibriervorrichtung nach Anspruch 2, dadurch gekennzeichnet, daß die Irisblenden (19,20,21,22) jeweils paarweise eng benachbart angeordnet sind und zwischeneinander einen schmalen, spaltförmig zur Schlauchfolie geöffneten Ringraum (23,24) bilden.

4.    Kalibriervorrichtung nach Anspruch 1 oder 2, dadurch gekennzeichnet, daß sie mehrere über die axiale Länge des geschlossenen Längsbereichs mit Abstand zueinander verteilte Irisblenden (5,6) aufweist.

5. Kalibriervorrichtung nach einem der Ansprüche 1 bis 4, dadurch gekennzeichnet, daß die Irisblenden (19,20,21,22) zumindest zum Teil miteinander gekoppelte Verstellgetriebe aufweisen.

6. Kalibriervorrichtung nach einem der Ansprüche 1 bis 5, dadurch gekennzeichnet, daß der bzw. jeder Ringraum (9) mehrere über den Umfang verteilte Drucklufteinlässe (10,11,12,) besitzt.

7. Kalibriervorrichtung nach einem der Ansprüche 1 bis 6, dadurch gekennzeichnet, daß der bzw. jeder Ringraum (9) mit Leitblechen (13) zur Luftführung ausgestattet ist.

0127565

Fig. 1

Fig. 2

0127565

Fig. 3